# NEW EUROPEAN PATENT SPECIFICATION

(11) **EP 1 117 865 B2**
(45) Date of publication and mention of the opposition decision: **04.04.2012**
(45) Mention of the grant of the patent: 04.05.2005
(21) Application number: 99942854.3
(22) Date of filing: 11.08.1999
(51) Int. Cl.: D06N 7/00, D04H 13/00, B32B 5/26

(54) **NONWOVEN BACKING AND CARPET COMPRISING SAME**
FASERVLIESS ALS UNTERLAGE UND TUFTING-TEPPICH
SUBSTRAT NON TISSE ET MOQUETTE LE COMPRENANT

(30) Priority: 27.08.1998 US 141025
(43) Date of publication of application: 25.07.2001
(73) Proprietor: Colbond B.V., 6827 AV Arnhem (NL)
(72) Inventor: COOLEN, Peter, Thomas, Asheville, NC 28806 (US); JOHNSON, Samuel, T., III, Arden, NC 28704 (US)
(74) Representative: Oberlein, Gerriet H. R.
(86) International application number: PCT/EP1999/005892
(87) International publication number: WO 2000/012800

(56) References cited:
- EP-A1- 0 677 607
- EP-B1- 0 619 849
- US-A- 3 895 151
- US-A- 3 940 302
- US-A- 4 842 915
- US-A- 5 283 097
- US-A- 5 660 910
- PATENT ABSTRACTS OF JAPAN vol. 018, no. 319 (M-1623), 17 June 1994 (1994-06-17) & JP 06 072223 A (HAYASHI GIJUTSU KENKYUSHO:KK), 15 March 1994 (1994-03-15)
- PATENT ABSTRACTS OF JAPAN vol. 015, no. 293 (C-0853), 25 July 1991 (1991-07-25) & JP 03 104973 A (UNITIKA LTD), 1 May 1991 (1991-05-01)
- PATENT ABSTRACTS OF JAPAN vol. 017, no. 211 (C-1052), 26 April 1993 (1993-04-26) & JP 04 352861 A (UNITIKA LTD), 7 December 1992 (1992-12-07) cited in the application
- PATENT ABSTRACTS OF JAPAN vol. 018, no. 430 (C-1236), 11 August 1994 (1994-08-11) & JP 06 128855 A (UNITIKA LTD), 10 May 1994 (1994-05-10) cited in the application
- DATABASE WPI Section Ch, Week 198832 Derwent Publications Ltd., London, GB; Class A94, AN 1988-224387 XP002131616 & JP 63 159564 A (UNITIKA LTD), 2 July 1988 (1988-07-02)

## Description

The invention pertains to a nonwoven primary carpet backing comprising thermoplastic polymer filaments or fibres bonded by means of a binder polymer.

The manufacture of nonwoven primary carpet backings, with filaments or fibres of a thermoplastic polymer being bonded with the aid of, e.g., a thermoplastic polymer bonding agent, has been known for many years, e.g., from US 4,842,915. This publication relates to a spunbonded fabric consisting of polyester matrix filaments, which fabric is suitable to be used as a tufting base for carpets and is strengthened by means of a binding component in the form of softenable filaments, fibres, a powder and/or fine-grained granulates. The binding component consists of polypropylene with a melting range which is at least 90°C below the melting range of the polyester matrix filaments or fibres.

Over the years, nonwoven primary carpet backings have been improved constantly in order to meet the ever more stringent demands of carpet manufacturers and consumers. Of particular importance are increasing the breaking strength and elongation at break after tufting, increasing the tear resistance after tufting and coating, generally improving the appearance of the resulting carpet, allowing effective mending of imperfections which occur during tufting, and facilitating tuftability, i.e. by providing lower tuft-needle penetration resistance and reduced needle deflection during tufting, avoiding rough back stitch, increasing stitch lock, and reducing noise during tufting.

It is an object of the present invention to provide the said improvements. This is achieved in the carpet backings as described in the first paragraph, wherein the backing consists of three distinguishable layers, wherein distinguishable indicates that the transition from one layer to the next is essentially not gradual, wherein one of the distinguishable layers reduces the delamination strength of the backing and is a distinguishable nonwoven layer, wherein the distinguishable layer which reduces the delamination strength of the backing is embedded in the backing as an inner layer between two outer layers and wherein each of the three distinguishable layers comprises thermoplastic polymer filaments or fibres thermally bonded by means of a binder polymer, wherein the concentration of the binder polymer in the layer which reduces the delamination strength of the backing is at least 20% lower and/or the bonding temperature of the binder polymer in the layer which reduces the delamination strength of the backing is at least 4°C higher than that of the binder polymer in the outer layers, wherein the delamination strength of the backing measured in accordance with DIN 54310 is reduced by at least 30% with respect to the same backing without said distinguishable layer which reduces the delamination strength of the backing, wherein the delamination strength of the backing measured in accordance with DIN 54310 is lower than 6N, wherein the filaments or fibres are sheath/core filaments or fibres with the binder polymer forming the sheath, and wherein the linear density of the filaments or fibres is in the range from 1 to 25 dtex.

The term "distinguishable" indicates that, although some mixing and/or interlocking of the filaments or fibres in the different layers cannot be avoided in nonwovens, the transition from one layer to the next is essentially not gradual. It is preferred that each of the layers is substantially homogeneous (i.e., exhibits no large gradients in composition over its thickness) and/or consists of a single type of filaments or fibres or a homogeneous blend of more than one type of filaments or fibres.

In general, tufting reduces the breaking strength of (high initial breaking strength) nonwoven backings because of the disruption and/or damage caused by the tufting needles. Also, it was found that a decrease in delamination strength achieved through a (substitutive or additional) distinguishable layer resulted in a substantial decrease in tensile breaking strength of the backing, which decrease at first may seem disadvantageous. However, it appeared that the deliberate reduction in breaking strength in accordance with the present invention (i.e. by decreasing the delamination strength of the backing) suppresses the reduction in breaking strength and elongation resulting from tufting. Although the breaking strength of the *untufted* backing according to the invention is lower than that of *untufted* prior art backings, the *tufted* backing according to the invention actually has a higher breaking strength and elongation than *tufted* prior art backings. This phenomenon will be illustrated and substantiated by the examples hereinbelow.

The distinguishable layer, which on the one hand is responsible for the reduction of the delamination strength (e.g., through higher mobility of the filaments or fibres and/or by reduced adherence to the other layer(s)) and on the other hand should provide sufficient coherence of the laminate to allow (rough) handling and processing, can take many forms, such as a dry-laid, a wet-laid, or a meltblown nonwoven. However, thermally or chemically (spun)bonded nonwovens, which may in addition be needle-punched or hydroentangled, are preferred.

It is noted that European patent application EP 822283 concerns a spunbonded web comprising two types, (a) and (b), of bicomponent sheath/core filaments having a polyethylene terephthalate core which has a melting temperature higher than that of the sheath of binding polymer. The ratio by weight of the sheath polymer of the type (a) filament to the type (b) filament is in the range from 1:3 to 1:10. Over the cross-section of the web, the ratio by weight of type (a) filaments to type (b) filaments varies from 15 to 70%. This latter ratio changes through the cross-sectional planes of the web without any noticeable or distinguishable phase boundaries so as to avoid delamination. This technology, therefore, runs counter to that of the present invention, which seeks to promote delamination.

Japanese patent application JP 04-352861 concerns a nonwoven fabric composed of composite long fibres A of a polymer a1 and a polymer a2 having a melting point at least 30°C higher than that of a1, and composite long fibres B of a polymer b1 and a polymer b2 having a melting point at least 30°C higher than that of b1. Further, the melting point of polymer b1 is at least 20°C higher than that of a1. The fabric consists of four layers, the first containing only fibres A, the second containing more fibres A than fibres B, the third containing more fibres B than fibres A, and the fourth containing only fibres B. The concentration of fibres A and B varies continuously without any clear boundaries, so that no delamination occurs.

US 3,940,302 discloses a nonwoven web, suitable for use as a primary backing for tufted carpets, containing bicomponent filaments having a core of polypropylene and a sheath of copolyamide ("which is capable of being rendered adhesive in pressurised saturated steam at a pressure which leaves the core component substantially unaffected"), together with polypropylene homofilaments. Parallel yams are embedded in the web in its lengthwise direction. In a preferred embodiment, the bicomponent filaments are present in a higher concentration in a thin layer at at least one of the surfaces of the product than in the centre of the product so as to improve the dye uptake of the surface of the backing.

JP 09291457 concerns a laminate comprising web layers of a composite long fibre of side-by-side type or the sheath/core type composed of two kinds of polymers with different melting points, i.e. high-density polyethylene and high-density polypropylene. The amount of high density polyethylene is different in each web layer. The laminate has super bulkiness, feel, and tensile strength.

JP 06128855 discloses a three layer structure nonwoven fabric comprising a surface layer, an intermediate layer, and a backside layer. The surface layer and the backside layer are composed of a conjugate type long fibre consisting of a thermoplastic polymer component A and a thermoplastic polymer component B which is incompatible with A. The long fibres are bonded by the fusion bonding of component A. The intermediate layer contains fibre A consisting of only A and fibre B consisting of only B, which fibres are formed by dividing the conjugate type long fibre. Fibre A is entangled with fibre B without substantially being fused.

US 5,660,910 discloses a spun-bonded nonwoven composite web comprising randomly laid continuous matrix filaments having an average linear density per filament less than 25 denier; and continuous reinforcement filaments having an average linear density which exceeds 20 denier and exceeds the average linear density per filament of said matrix filaments by at least 10 denier; wherein said continuous matrix filaments are at least partially bonded together to form said web and said continuous filament are enmeshed in said web without substantially bonding to other filaments in said web such that when the web is tom in accordance with ASTM D 2261-83, more than three reinforcement filaments are pulled out more than 1 cm from the web into the tear. According to the examples of US 5,660,910 fabrics consisting of 13.5 denier per filament yam as matrix yam reinforced with a single 300 denier nylon 6.6 or polyethylene terephthalate monofilament as reinforcement yam after tufting and molding exhibited an increased tear strength and showed pulled reinforcement behaviour. The continuous matrix filaments are at least partially bonded together and the reinforced filaments are enmeshed in the web without substantially bonding to other filaments in the web.

EP 0677607 A1 discloses a nonwoven fabric made of multiple layers of continuous fibers. Each layer of continuous fibers is composed of a single type of polymer. The nonwoven fabric is thermally bonded at the melting temperature of the highest melting polymer to obtain an overbonded nonwoven having maximum delamination strength.

EP 0619849 B1 discloses a nonwoven primary carpet backing consisting of polyolefin filaments, which have alternate highly oriented and less oriented segments along their length. The less oriented segments have a lower melting point and are referred to as binder segments. The whole nonwoven sheet is consolidated by lightly bonding the filaments together to withstand handling and subsequently the nonwoven sheet is debonded to delaminate the nonwoven sheet to obtain high elongation in the nonwoven sheet. The inner layers have a higher binder concentration than the outer layers.

Within the framework of the invention, the layer which is responsible for the reduction in delamination strength is embedded (as an inner layer) in the backing, which thus comprises three distinguishable layers. In such a structure the outer layers can move relative to one another (locally), which helps holding of tufted yam, and provide the required stability and other mechanical properties of the backing.

The backing is thermally bonded and each of the layers comprises a (thermoplastic) binder polymer and filaments or fibres of a thermoplastic polymer, wherein the concentration and/or the bonding temperature of the binder polymer in the layer responsible for the reduction in delamination strength is at least 20, preferably at least 30 per cent lower and/or 4°C, preferably at least 6°C higher than that of the binder polymer in the other layer or layers. By providing a lower degree of bonding, the delamination strength is effectively reduced and holding of the tufted yarn, also referred to as "stitch lock" or "stitch holding," is further enhanced owing to the greater mobility of the filaments or fibres in the said layer.

Alternatively, selecting a binder polymer which, to a carefully selected degree, is incompatible with the binder polymer in the adjacent layer(s) will reduce bonding to the said layer(s), resulting in a lower delamination strength.

The melting or softening temperature of the binder polymer is preferably 15 to 20°C lower than that of the filaments or fibres, but in some polymer combinations a smaller difference may be advisable or even essential.

When the binder polymer is part of the filaments or fibres (with the binder polymer preferably forming at least part of the outer surface of the filaments or fibres) - the term used in that case is bicomponent filaments or fibres - it will be homogeneously distributed throughout the as yet unbonded nonwoven as the filaments or fibres are laid. Because of this homogeneous distribution there will be bonding agent at (virtually) all points where the filaments or fibres come into contact. As a result, there will be a large number of bonding points and, in addition, the guarantee of an effective supply of bonding agent to the points of contact during the thermal bonding process.

Bicomponent fibres and filaments or fibres of the core/sheath or the side-by-side type in particular are highly suited to be used in the nonwovens according to the invention.

Another very suitable method for adding the bonding agent to the thermoplastic filaments or fibres is by using a "bonding filament" or "bonding fibre" which is made up entirely or for the most part of the binder polymer. These bonding filaments or bonding fibres are laid together with the other filaments or fibres, so that here also a homogeneous distribution of the bonding agent throughout the as yet unbonded nonwoven is obtained. Such a nonwoven is sometimes referred to as a "bifilament nonwoven."

For that matter, the invention is not restricted to the forms of the binder polymer described above. It is also possible for the bonding agent to be added to the unbonded filaments or fibres in the form of, e.g., a powder, an emulsion, or as fibrids.

Examples of polymers and copolymers which are highly suitable for use as a binder polymer in the nonwoven according to the invention are polyamide 6, copolyamides, copolyesters, polypropylene, copolypropylene, polyethylene, and mixtures of one or more of these materials. An example of another suitable material is polybutylene terephthalate. The binder may also be added in the form of monomers which are cured (i.e., polymerised) during bonding.

Amongst others, polyester is highly appropriate for the thermoplastic filaments or fibres. Further suitable materials include, but are not restricted to, polyamide 6, polyamide 46, polyamide 66, copolyamides, and copolyesters.

The layer responsible for the reduction in delamination strength is a nonwoven layer, the volume ratio of the binder polymer to the filament or fibre forming polymer is preferably lower than 20:80, more preferably lower than 15:85. In the other nonwoven layer or layers, the said ratio is preferably within the range from 20:80 to 50:50, more preferably in the range from 20:80 to 35:65.

The linear density of the filaments or fibres is in a range from 5 to 20 dtex. At a linear density below about 1 dtex, the nonwoven material is rather dense (especially at higher basic weights) resulting in more damage to the backing and an increased number of needle deflections during tufting. At a linear density in excess of about 25 dtex, the nonwoven material is very "open" (especially at lower basic weights) and stitch holding is reduced.

The total basic weight of the carpet backings according to the present invention is preferably at least 50 g/m², more preferably at least 70 g/m². It is further preferred that the basic weight of the layer responsible for the reduction in delamination strength is less than 50 per cent, more preferably less than 40 per cent of the total basic weight of the carpet backing.

Although the delamination strength of the backing of the invention is defined relative to backings which do not contain the (substitutive or additional) distinguishable layer described above, the delamination strength, measured in accordance with DIN 54310 is lower than 6 N.

The invention further pertains to a carpet comprising the nonwoven backing described above. Such a carpet exhibits increased strength and elongation and is more even.

The aforementioned bonding temperature is the temperature at which the (binder) polymer melts and/or softens and bonding points between contacting filaments or fibres are established. This bonding temperature can be manipulated in various ways, e.g., by selecting a binder polymer that has a different melting temperature and/or Melt Flow Index or meltviscosity.

The melting temperature is measured with the generally known DSC (Differential Scanning Calorimetry) technique, where a specimen of about 5 mg (which is in a nitrogen atmosphere) is heated at a rate of 10°C per minute. The peak temperature of the melt endotherm obtained using this DSC technique is referred to within the framework of this invention as the "melting temperature."

The reduction in "concentration" of binder polymer in a layer can be achieved in various ways, for instance by employing sheath/core filaments or fibres with a lower sheath/core ratio or by blending in less "bonding filament" or "bonding fibre".

### Examples

All samples were spunbonded using commonly known technology for depositing three distinguishable layers of filaments on top of each other on a collector surface. In each sample, the basic weight of the backings amounted to 120 g/m². The filaments were all of the sheath/core type, having a polyethylene terephthalate core and a polyamide 6 sheath. After deposition the samples were thermally bonded.

Samples 1a and 1b, i.e. the controls, consisted of three identical layers, each having a basic weight of 40 g/m² and consisting of filaments having a 26/74 sheath/core volume ratio and a linear density of 9 dtex. Samples 2a and 2b, i.e. in accordance with the invention, consisted of two identical outer layers of filaments having a 26/74 sheath/core volume ratio and an inner layer of 10/90 sheath/core volume ratio. All filaments had a linear density of 9 dtex and all three layers had a basic weight of 40 g/m². Sample 3, also in accordance with the present invention, consisted of two identical outer layers, each having a basic weight of 36 g/m² and consisting of filaments having a 26/74 sheath/core volume ratio and a linear density of 9 dtex, and an inner layer having a basic weight of 48 g/m² and consisting of filaments having a 10/90 sheath/core volume ratio and a linear density of 6 dtex. Samples 1 a and 2a were produced at a lower bonding temperature than samples 1 b, 2b, and sample 3.

The following properties of the samples were determined: Breaking strength and elongation at break before tufting measured in accordance with DIN 53857-2; Breaking strength and elongation at break after tufting measured in accordance with ASTM D2646; Delamination strength measured in accordance with DIN 54310; and Appearance based on the scores of ten experts the tufted samples were qualified as "even" or "uneven."

**Table 1**

| **Properties before tufting** | | | |
|---|---|---|---|
| Sample | Strength (MD/CMD)/2 in N/5cm | Elongation (MD/CMD)/2 in % | Delamination strength in N |
| 1a control | 334 | 22 | 7.4 |
| 1b control | 324 | 22 | 11.6 |
| | | | |
| 2a invent. | 194 | 11 | 2.3 |
| 2b invent. | 203 | 12 | 4.0 |
| 3 invent. | 166 | 9 | 5.3 |

**Table 2**

| **Properties after tufting** | | | |
|---|---|---|---|
| Sample | Strength (MD/CMD)/2 in Ibs. | Elongation (MD/CMD)/2 in % | Appearance |
| 1a centrol | 112 | 65 | uneven |
| 1b control | 105 | 64 | uneven |
| | | | |
| 2a invent. | 138 | 76 | even |
| 2b invent. | 136 | 72 | even |
| 3 invent. | 144 | 73 | even |

These experiments clearly show that, although the backings in accordance with the invention have reduced strength and elongation before tufting (Table 1; about 35 to 60% lower when compared to the control backing), they exhibit considerably improved strength and elongation after tufting (Table 2; up to approximately 40% higher when compared to the control backing). Also, the appearance of carpets produced with the backings according to the invention are much more even than carpets produced with the controls.

## Claims

1. A nonwoven primary carpet backing comprising thermoplastic polymer filaments or fibres bonded by means of a binder polymer, **characterised in that** the backing consists of three distinguishable layers, wherein distinguishable indicates that the transition from one layer to the next is essentially not gradual, wherein one of the distinguishable layers reduces the delamination strength of the backing and is a distinguishable nonwoven layer, wherein the distinguishable layer which reduces the delamination strength of the backing is embedded in the backing as an inner layer between two outer layers and wherein each of the three distinguishable layers comprises thermoplastic polymer filaments or fibres thermally bonded by means of a binder polymer, wherein the concentration of the binder polymer in the layer which reduces the delamination strength of the backing is at least 20% lower and/or the bonding temperature of the binder polymer in the layer which reduces the delamination strength of the backing is at least 4°C higher than that of the binder polymer in the outer layers, wherein the delamination strength of the backing measured in accordance with DIN 54310 is reduced by at least 30% with respect to the same backing without the said distinguishable layer which reduces the delamination strength of the backing, wherein the delamination strength of the backing measured in accordance with DIN 54310 is lower than 6N, wherein the filaments or fibres are sheath/core filaments or fibres with the binder polymer forming the sheath, and wherein the linear density of the filaments or fibres is in the range from 1 to 25 dtex.

2. The nonwoven backing according to claim 1 wherein the concentration of the binder polymer in the layer which reduces the delamination strength of the backing is at least 30% lower and/or the bonding temperature of the binder polymer in the layer which reduces the delamination strength of the baking is at least 6 °C higher than that of the binder polymer in the outer layers.

3. The nonwoven backing according to any one of the preceding claims wherein the binder polymer in at least one of the layers is selected from the group consisting of polyamide 6, copolyamides, polybutylene terephthalate, copolyesters, polypropylene, copolypropylene, polyethylene, and mixtures of one or more of these materials.

4. The nonwoven backing according to any one of the preceding claims wherein the thermoplastic polymer building the filaments or fibres in at least one of the layers is selected from the group consisting of polyester, polyamide 6, polyamide 46, polyamide 66, copolyamides, and copolyesters.

5. The nonwoven backing according to any one of the preceding claims wherein the linear density of the filaments or fibres is in the range 5 to 20 dtex.

6. Carpet comprising the nonwoven primary backing according to any one of the preceding claims.

## Patentansprüche

1. Primärer Vlies-Teppichrücken, der thermoplastische Polymerfäden oder -fasern umfasst, die mit Hilfe eines Binderpolymers verfestigt sind, **dadurch gekennzeichnet, dass** der Teppichrücken aus drei unterscheidbaren Schichten besteht, wobei "unterscheidbar" anzeigt, dass der Übergang von einer Schicht zur nächsten im Wesentlichen nicht allmählich verläuft, wobei eine der unterscheidbaren Schichten die Abschälfestigkeit des Teppichrückens reduziert und eine unterscheidbare Vliesschicht ist, wobei die die Abschälfestigkeit des Teppichrückens reduzierende unterscheidbare Schicht als eine innere Schicht zwischen zwei äußeren Schichten in den Teppichrücken eingebettet ist und wobei jede der drei unterscheidbaren Schichten thermoplastische Polymerfäden oder -fasern umfasst, die mit Hilfe eines Binderpolymers thermisch verfestigt sind, wobei die Konzentration des Binderpolymers in der die Abschälfestigkeit des Teppichrückens reduzierenden Schicht mindestens 20 % niedriger und/oder die Bindetemperatur des Binderpolymers in der die Abschälfestigkeit des Teppichrückens reduzierenden Schicht mindestens 4 °C höher ist als die des Binderpolymers in den äußeren Schichten, wobei die nach DIN 54310 gemessene Abschälfestigkeit ohne die des Teppichrückens in Bezug auf denselben Teppichrücken die Abschälfestigkeit des Teppichrückens reduzierende unterscheidbare Schicht um mindestens 30 % reduziert ist, wobei die nach DIN 54310 gemessene Abschälfestigkeit des Teppichrückens weniger als 6 N beträgt, wobei die Fäden oder Fasern in Form von Mantel/Kern-Fäden oder Mantel/Kern-Fasern vorliegen, wobei das Binderpolymer den Mantel bildet und wobei die lineare Dichte der Fäden oder Fasern im Bereich von 1 bis 25 dtex liegt.

2. Vlies-Teppichrücken nach Anspruch 1, bei dem die Konzentration des Binderpolymers in der die Abschälfestigkeit des Teppichrückens reduzierenden Schicht mindestens 30 % niedriger ist und/oder die Bindetemperatur des Binderpolymers in der die Abschälfestigkeit des Teppichrückens reduzierenden Schicht mindestens 6 °C höher ist als die des Binderpolymers in den äußeren Schichten.

3. Vlies-Teppichrücken nach einem der vorangegangenen Ansprüche, bei dem das Binderpolymer in mindestens einer der Schichten aus der Gruppe bestehend aus Polyamid 6, Copolyamiden, Polybutylenterephthalat, Copolyestern, Polypropylen, Copolypropylen, Polyethylen und Mischungen aus einem oder mehreren dieser Stoffe ausgewählt ist.

4. Vlies-Teppichrücken nach einem der vorangegangenen Ansprüche, bei dem das thermoplastische Polymer, das die Fäden oder Fasern in mindestens einer der Schichten bildet, aus der Gruppe bestehend aus Polyester, Polyamid 6, Polyamid 46, Polyamid 66, Copolyamiden und Copolyestern ausgewählt ist.

5. Vlies-Teppichrücken nach einem der vorangegangenen Ansprüche, bei dem die lineare Dichte der Fäden oder Fasern im Bereich von 5 bis 20 dtex liegt.

6. Teppich, der den primären Vlies-Rücken nach einem der vorangegangenen Ansprüche umfasst.

## Revendications

1. Endos de tapis primaire non-tissé, comprenant des fibres ou des filaments de polymère thermoplastique liés au moyen d'un polymère liant, **caractérisé en ce que** cet endos est constitué de trois couches bien distinctes, ce qui signifie que la transition d'une couche à sa voisine n'est pratiquement pas progressive, l'une de ces couches bien distinctes abaisse la résistance au délaminage de l'endos et est une couche distincte de non-tissé, cette couche distincte qui abaisse la résistance au délaminage de l'endos est incorporée au sein même de l'endos, en tant que couche interne placée entre deux couches externes, chacune des trois couches bien distinctes comprend des fibres ou des filaments de polymère thermoplastique liés à chaud au moyen d'un polymère liant, la concentration du polymère liant présent dans la couche qui abaisse la résistance de l'endos au délaminage est d'au moins 20 % plus basse, et/ou la température de liaison du polymère liant présent dans la couche qui abaisse la résistance de l'endos au délaminage est d'au moins 4 °C plus haute, que celles du polymère liant présent dans les couches externes, la résistance au délaminage de l'endos, mesurée selon la norme DIN 54310, est abaissée d'au moins 30 % par rapport à celle d'un endos identique, mais privé de ladite couche distincte qui abaisse la résistance au délaminage de l'endos, la résistance au délaminage de l'endos, mesurée selon la norme DIN 54310, est inférieure à 6 N, les filaments ou les fibres sont des filaments ou des fibres du type gaine/coeur dont la gaine est constituée par le polymère liant, et le titre des filaments ou des fibres vaut de 1 à 25 dtex.

2. Endos non-tissé conforme à la revendication 1, dans lequel la concentration du polymère liant présent dans la couche qui abaisse la résistance de l'endos au délaminage est d'au moins 30 % plus basse, et/ou la température de liaison du polymère liant présent dans la couche qui abaisse la résistance de l'endos au délaminage est d'au moins 6 °C plus haute, que celles du polymère liant présent dans les couches externes,

3. Endos non-tissé conforme à l'une des revendications précédentes, dans lequel le polymère liant présent dans au moins l'une des couches est choisi dans l'ensemble formé par les polyamide-6, copolyamides, poly(butylène téréphtalate), copolyesters, polypropylène, copolypropylènes et polyéthylène, ainsi que par les mélanges contenant un ou plusieurs de ces matériaux.

4. Endos non-tissé conforme à l'une des revendications précédentes, dans lequel le polymère thermoplastique duquel sont faits les filaments ou les fibres d'au moins l'une des couches est choisi dans l'ensemble constitué par les polyesters, polyamide-6, polyamide-46, polyamide-66, copolyamides et copolyesters.

5. Endos non-tissé conforme à l'une des revendications précédentes, dans lequel le titre des filaments ou des fibres vaut de 5 à 20 dtex.

6. Tapis comprenant un endos primaire non-tissé conforme à l'une des revendications précédentes.
